# EUROPÄISCHE PATENTSCHRIFT

(11) **EP 1 238 702 B1**
(45) Veröffentlichungstag und Bekanntmachung des Hinweises auf die Patenterteilung: **13.08.2008**
(21) Anmeldenummer: 02004397.2
(22) Anmeldetag: 06.03.2002
(51) Int. Cl.: B01J 23/80, B01J 37/03, C01B 3/32

(54) **Verfahren zur Herstellung von Katalysatoren mit geringem Volumenschwund**
Preparation process of a catalyst with low shrinkage
Procédé de préparation d'un catalyseur à faible taux de retrait

(30) Priorität: 08.03.2001 DE 10111197
(43) Veröffentlichungstag der Anmeldung: 11.09.2002
(73) Patentinhaber: BASF SE, 67056 Ludwigshafen (DE)
(72) Erfinder: Hölzle, Markus, 67281 Kirchheim (DE); Sprague, Michael Jolyon, 68161 Mannheim (DE); Harth, Klaus, 67317 Altleiningen (DE); Pöpel, Wolfgang Jürgen, 64297 Darmstadt (DE)
(74) Vertreter: Isenbruck, Günter

(56) Entgegenhaltungen:
- EP-A- 1 077 081
- US-A- 4 305 842
- US-A- 5 345 005
- US-A- 5 928 985
- DATABASE WPI Section Ch, Week 198048 Derwent Publications Ltd., London, GB; Class E17, AN 1980-86020C XP002205621 & SU 728 908 A (LENDER YU V), 25. April 1980 (1980-04-25)

## Beschreibung

Die Erfindung betrifft Verfahren zur Herstellung von Katalysatoren, insbesondere von Methanolreformierungskatalysatoren mit geringem Volumenschwund sowie den Einsatz dieser Katalysatoren zur Dampfreformierung von Methanol oder von höheren Alkoholen, zur partiellen Oxidation von Kohlenwasserstoffen zur Wasserstoffgewinnung oder als CO-Shiftkatalysator.

Bei Fahrzeugen mit Brennstoffzellenantrieb wird der notwendige Wasserstoff vorteilhafterweise erst beim Fahrbetrieb aus einem flüssigen Kraftstoff erzeugt. Bei Methanol als Kraftstoff geschieht dies primär mittels Dampfreformierung, autothermer Reformierung oder partieller Oxidation. Beim Einsatz von Kohlenwasserstoffen als Kraftstoff ist eine Wasserstoffgewinnung über partielle Oxidation oder autotherme partielle Oxidation möglich. Das als Haupt- bzw. Nebenprodukt immer mitgebildete CO muß entweder durch Wassergas-Shift entfernt oder durch Selektivoxidation in für die Brennstoffzelle unschädliches CO₂ umgewandelt werden.

Die Wasserdampfreformierung von Methanol und die CO-Shiftreaktion werden von Cu-haltigen Katalysatoren beschleunigt. Meist handelt es sich um Stoffe der überwiegenden chemischen Zusammensetzung CuO/ZnO/MeO mit MeO = z.B. Al₂O₃, ZrO₂, La₂O₃, Cr₂O₃. Derartige Katalysatoren werden in oxidischer Form hergestellt und dann meist im Reaktor unter reduzierenden Bedingungen aktiviert, wobei sich dann das CuO zu elementarem Cu umwandelt, der eigentlichen katalytisch aktiven Spezies. Die Reduktion derartiger Katalysatoren ist immer mit einem Volumen- und Massenschwund des Katalysatorformkörpers verbunden. Dieser liegt typischerweise in der Größenordnung zwischen 10 und 25%. Dies führt dazu, daß bei einem komplett befüllten Reaktor (z.B. einem Rohrbündelreaktor oder einem Plattenwärmetauscherreaktor) bis zu einem Viertel des Reaktionsraumes ungenutzt bleibt. Dies ist insbesondere bei mobilen Reformern, die so kompakt wie möglich gebaut werden, nicht wünschenswert.

Der Einsatz von Katalysatoren zur Wasserstofferzeugung bei mobilen Anwendungen, primär in von Brennstoffzellen betriebenen Pkw, setzt Rahmenbedingungen, die weit über das hinausgehen, was bei industriellen Anwendungen notwendig ist.

So ist auf Grund des geringen Platzangebots im Pkw die Größe der Reaktoren ebenfalls stark limitiert Der im Reaktor vorhandene Reaktionsraum muß vollständig mit Katalysator gefüllt sein, damit kein überschüssiges Leerraumvolumen vorhanden ist. Durch den gebildeten Leerraum kann eine Fixierung des Katalysators aufgehoben werden. Liegt der Katalysator z.B. als Schüttung vor, so können die Katalysatorpellets dann durch die hohen mechanischen Belastungen beim Fahrbetrieb umherfliegen. Dies kann zu einer deutlichen Erhöhung des Abriebs führen. Dieser Abrieb ist unerwünscht, da er zu Verstopfungen oder anderweitigen Beeinträchtigungen nachgeschalteter Komponenten führen kann.

Ein zusätzliches Problem kann dann entstehen, wenn die Reformer direkt beheizt werden. Hierbei wird auf eine Wärmeträgerflüssigkeit verzichtet, vielmehr wird die für die Reformierung notwendige Wärme direkt durch katalytische Verbrennung von Wasserstoff oder Methanol erzeugt. Bei einer derartigen Art der Wärmeerzeugung kann es rasch zu Überhitzungen kommen, wenn Teile der Reaktorrohre bzw. -platten nicht mit Katalysator in Kontakt stehen. Eine derartige Überhitzung führt einerseits zu Materialermüdungen am Reaktor, kann aber andererseits auch zur Verkokung des eingesetzten Kraftstoffs führen.

US 5,345,005 offenbart ein Verfahren zur Herstellung eines Katalysators enthaltend Kupfer, Zink und Aluminiumoxid durch Mischen einer Lösung enthaltend Kupfer- und Zinksalze mit einer Lösung enthaltend ein Aluminiumsalz, Abtrennen, des entstehenden Niederschlags, Trocknen und Calzinieren.

US 4,305,842 offenbart ein Verfahren zur Herstellung eines Katalysators, der Kupferoxid, Zinkoxid, Aluminiumoxid und gegebenenfalls Boroxid enthält, durch Mischen von Niederschlägen erhalten aus der Fällung eines Zinksalzes bzw. aus der Fällung eines Kupfersalzes mit einer Aluminiumvorläuferverbindung, und anschließendem Calzinieren.

Das Problem des Volumenschwunds ist schon länger bekannt, und es sind auch Lösungsansätze hierfür beschrieben. So betrifft EP-A-0 884 272 die Voralterung eines Cubasierten Katalysators durch Methanolreformierung für ca. 50 Stunden. Die "Voralterung kann in einem gesonderten Reaktor oder im eigentlichen Reformerreaktor durchgeführt werden, wobei im letztgenannten Fall mehrfach Katalysator nachgefüllt werden muß.

EP-A-0 884 270 betrifft ein anderes Vorbehandlungswerfahren für das gleiche Katalysatorsystem. Hier wird der Katalysator unter inerter oder oxidierender Atmosphäre bei Temperaturen > 300°C vorgealtert. Bei einer derartigen Vorbehandlung, die im Prinzip eine weitere Kalzination darstellt, können jedoch nur geringe Volumenschwunde erzielt werden.

Beide Ansätze, gemäß EP-A 0 884 272 bzw. EP-A 0 884 270 beinhalten jedoch im Prinzip einen weiteren Herstellschritt zusätzlich zur eigentlichen Katalysatorherstellung. Die Schritte sind aufwendig (insbesondere EP-A 0 884 272) und sollten möglichst vermieden werden.

Ein ebenfalls immer auftretender, negativer Nebeneffekt bei der Reduktion von Katalysatoren ist eine Verringerung der mechanischen Stabilität. Insbesondere bei Katalysatoren in Tablettenform ist die Ausbauhärte (Seitendruckfestigkeit/Stirndruckfestigkeit) oftmals nur noch ein Bruchteil der Ausgangshärte, bei deren Messung der Katalysator noch in oxidischer Form vorlag. Die geringe mechanische Stabilität der Tabletten ist bei mobilen Reformern jedoch unerwünscht. Liegt z.B. eine verdichtete Schüttung in Form von Katalysatortabletten vor, so gibt es im Fahrbetrieb immer eine gewisse Reibung der Tabletten aneinander, was insbesondere an den Ecken und Kanten der Tabletten zu erhöhtem Abrieb führen kann. Dieser Abrieb ist unabhängig davon, ob sich - bedingt durch den Volumenschwund - oberhalb der Schüttung ein Hohlraum bildet.

Um auch im reduzierten Zustand mechanisch stabile Katalysatortabletten zu erhalten, gibt es unterschiedliche Ansätze, die einerseits auf eine Verbesserung der Aktivmasse abzielen, andererseits auch Tablettierzusätze zur Erhöhung der mechanischen Stabilität beschreiben. So wird in DE-A-195 05 347 ein Verfahren beschrieben, bei dem ein Cu-haltiger Katalysator durch Zusatz von Cu- oder Aluminiumpulver tablettiert wird. Dies führt zu einer deutlichen Erhöhung der Härte des Katalysators auch im reduzierten Zustand. Ein Nachteil dieses Verfahrens ist es jedoch, daß die Aktivität derartiger Katalysatoren immer geringer ist als die Aktivität von vergleichbaren Katalysatoren ohne Metallzusatz.

Aufgabe der vorliegenden Erfindung ist die Bereitstellung eines Verfahren zur Herstellung eines Katalysators, der später im Betrieb einen stark verminderten bis keinen Volumenschwund bei gleichzeitig deutlich erhöhter mechanischer Festigkeit zeigt. Derartige Katalysatoren werden bevorzugt zur Wasserdampfreformierung von Methanol oder höherer Alkohole, zur partiellen Oxidation von Kohlenwasserstoffen oder als CO-Shiftkatalysator eingesetzt. Dies soll insbesondere für in einem Reaktor angeordnete Katalysatoren gelten, die in der Regel als Formkörper eingesetzt werden. Der Volumenverlust bei der Aufnahme des Betriebs soll vorzugsweise maximal 5%, besonders bevorzugt maximal 4% betragen. Zudem sollen die erfindungsgemäß hergestellten Katalysatoren neben einem geringen Volumenschwund eine hohe mechanische Härte zeigen.

Die Aufgabe wird erfindungsgemäß gelöst durch ein Verfahren zur Herstellung von Katalysatoren, insbesondere von Methanolreformierungskatalysatoren, enthaltend passiviertes Kupfer und Zinkoxid und Aluminiumoxid, durch
(1) (a) Fällen einer Lösung von Zink- und Aluminumsalzen, wobei das Atomverhältnis Zn : Al 3 : 1 - 1 : 3 beträgt, mit einer Alkalicarbonatlösung bei einem pH-Wert im Bereich von 5 bis 12 und einer Temperatur im Bereich von 20 bis 100°C,
   (b) Abtrennen und Waschen des Niederschlags zur Entfernung von Alkaliionen,
   (c) Trocknen des Niederschlags,
   (d) Calcinieren des Niederschlags bei einer Temperatur im Bereich von 250 bis 800°C zu einem Mischoxid,
   (e) Dispergieren des Mischoxids in einer sauren Lösung von Kupfer-und Zinksalzen, wobei in der Lösung das Atomverhältnis Cu : Zn 1 : 5 bis 20 : 1 beträgt,
   (f) Fällen der Dispersion mit einer Alkalicarbonatlösung bei einem pH-Wert im Bereich von 6 bis 9 und einer Temperatur im Bereich von 20 bis 100°C,
   (g) Durchführen der Schritte (b) bis (d),
   wobei die Lösungen in Schritten (a) und/oder (e) zusätzlich Salze oder Oxide von einem oder mehreren Elementen der Platinmetalle der Gruppen 4, 5, 11 und der Lanthaniden des Periodensystems der Elemente enthalten können oder die Salze oder Oxide auf die Mischoxide aufgebracht sein können,
(2) Calcinieren des in Stufe (1) erhaltenen festen Katalysatorvorläufers bis zum Erreichen eines Anionengehalts aus dem Fällungsmittel, insbesondere Carbonatgehalts, bestimmt als CO₃, von 0,1 bis 2,5 Gew.%,
(3) Formgebung und gegebenenfalls Reduzieren und Passivieren des calcinierten Katalysatorvorläufers aus Stufe (2) in beliebiger Reihenfolge zur Bildung des Katalysators.

Die angegebenen Inhaltsstoffe sind vorzugsweise die Hauptinhaltsstoffe des Katalysators.

Zudem wird die Aufgabe erfindungsgemäß gelöst durch nach dem Verfahren erhältliche Katalysatoren und ein Verfahren zur Verminderung des Volumenschwundes beim Betrieb von (Methanokeformierungs)katalysatoren, bei dem man die (Methanolreformierungs)katalysatoren nach dem vorstehenden Verfahren herstellt.

Beim Anionengehalt in Stufe (2) sind generell die Anionen des Fällmittels gemeint, die nach der Fällung im Katalysatorprecursor verbleiben. Restcarbonat wird dann gefunden, wenn ein carbonathaltiges Fällmittel, wie z.B. Soda, eingesetzt wird. Dies ist in der Regel bei großtechnischen Produkten auch der Fall. Ebensogut kann natürlich auch eine Lauge oder Oxalsäure als Fällmittel eingesetzt werden. Dies würde dann zu Resthydroxid bzw. zu Restoxalat führen.

Die Erfindung betrifft auch ein Verfahren zur Dampfreformierung von Methanol durch Umsetzung von Methanol und Wasser an einem derartigen Katalysator, bevorzugt bei einem Druck von 0,5 bis 10 bar und einer Temperatur von 150 bis 450°C.

Die Erfindung betrifft zudem ein Verfahren zur CO-Konvertierung durch Umsetzung mit Wasser an einem derartigen Katalysator, zur Bildung von Kohlendioxid und Wasserstoff.

Die nach dem erfindungsgemäßen Verfahren hergestellten Katalysatoren zeigen einen Volumenschwund beim bzw. nach Betrieb von vorzugsweise weniger als 5%, besonders bevorzugt weniger als 4% bei gleichzeitig hoher mechanischer Festigkeit im Betrieb, also im reduzierten Zustand.

Beides wird erreicht, indem eine Katalysatorvorstufe aus basischen Metallsalzen, wie Oxalaten, Hydroxiden, insbesondere Metallcarbonaten so calciniert wird, daß eine definierte Menge an Restanionen, insbesondere Restcarbonat im Katalysator verbleibt. Die Menge beträgt 0,1 bis 2,5 Gew.-%, vorzugsweise 0,2 bis 2,0 Gew.-%, insbesondere 0,3 bis 1,5 Gew.-%. Dies kann durch Wahl der Temperatur und Dauer für die Calcinierung gesteuert werden. Die Temperatur sollte jedoch nicht zu hoch sein, da der Katalysator ansonsten irreversibel geschädigt werden kann. Vorteilhaferweise nimmt man für diesen Vorgang das getrocknete Fällpulver, das bei großtechnischer Produktion meist in Form von Sprühpulver vorliegt. Das erfindungsgemäß calcinierte Pulver kann dann zu Formkörpern weiterverarbeitet werden, wobei u.a. folgende Schritte denkbar sind:
- Vorkompaktieren und Tablettieren des erfindungsgemäß vorbehandelten Pulvers zu Tabletten.
- Anmaischen, Kneten/Kollern und Extrudieren zu strangförmigen Extrudaten.
- Anmaischen, Kneten/Kollern und Extrudieren zu komplexen Formkörpern wie monolithischen Strukturen oder Katalysatorplatten mit oder ohne Sekundärstruktur.
- Aufziehen der katalytisch aktiven Masse auf inerte oder ebenfalls katalytisch aktive Träger mittels Hicoating oder ähnlicher Verfahren.

Bei allen Prozessen ist natürlich auch der Einsatz von Bindemitteln und Zuschlagstoffen erlaubt. Auch sind zahlreiche andere Möglichkeiten der Weiterverarbeitung denkbar.

Die beschriebene Prozedur erlaubt die Herstellung von Formkörpern mit
- geringem Volumenschwund beim Betrieb als Katalysator,
- hoher mechanischer Beständigkeit beim Betrieb im reduzierten Zustand.

Die erfindungsgemäßen Katalysatoren zeichnen sich durch einen geringen Volumenschwund in Kombination mit hoher mechanischer Festigkeit aus. Insbesondere die Kombination beider Eigenschaften: geringer Volumenschwund bei gleichzeitig hoher mechanischer Festigkeit zeichnet den erfindungsgemäßen Katalysator aus.
Ein großer Vorteil der Erfindung ist darin zu sehen, daß die erfindungsgemäß verringerte Schrumpfung durch keinen zusätzlichen Verfahrensschritt erkauft wird, sondern daß ein typischer Verfahrensschritt bei der Katalysatorherstellung, nämlich die Calcination, bezüglich des Anionengehalts, insbesondere CO₃-Gehaltes optimiert wird. Auch ist es so, daß kein weiterer Zuschlagstoff notwendig ist, um die Verringerung des Volumenschwunds zu erzielen. Zuschlagstoffe jeglicher Art verringern ganz zwangsläufig den Anteil der katalytisch aktiven Masse je Reaktorvolumen. Die Calcination hingegen ist bei der Herstellung eines Fällkatalysators ein absolut üblicher Schritt, um die bei der Fällung gebildeten Precursoren in die katalytisch aktiven Spezies umzuwandeln. Dabei werden typischerweise Temperaturen um 300°C gewählt, die jedoch auch deutlich darunter oder darüber liegen können, vorzugsweise 200 bis 400°C, insbesondere 250 bis 350°C. Diese Temperaturen können sich jedoch je nach Katalysatorsystem auch verschieben. So erfordern Katalysatoren, die mittels Laugen gefällt werden, meist höhere Temperaturen, um den gewünschten Effekt zu erzielen. Die Temperaturen hängen auch vom eingesetzten Ofen (Muffelofen im Labor - Drehrohrofen in der Technik) ab und können dabei oftmals die am Regler eingestellten Temperaturen darstellen, wobei die Innentemperaturen der Öfen, insbesondere bei Drehrohröfen, mitunter deutlich davon abweichen können. Außer der Temperatur der Calcination kann auch die Dauer der Calcination von Bedeutung für die Performance des fertigen Katalysators sein. Hier ist das Fenster jedoch vom Durchsatz der technischen Drehrohre abhängig und liegt somit vorzugsweise bei 0,1 bis 1 Stunden, insbesondere 0,2 bis 0,6 Stunden, meist im Bereich einer Stunde.

Aus der großen Zahl der vorhandenen Literatur zur Herstellung von Cu-haltigen Katalysatoren, insbesondere von Cu-Zn-Al-Mischoxidkatalysatoren, ist nicht zu entnehmen, daß der Rest-Anionengehalt, insbesondere Rest-Carbonatgehalt eines Katalysators gezielt eingestellt wurde, um einen optimalen Volumenschwund zu erhalten. Vielmehr beträgt der "typische" Gehalt an Restanionen, insbesondere Restcarbonat häufig mehr als 5 und bis 10%. Der Rest-Carbonatgehalt (Rest-Hydroxidgehalt) wird in den meisten Veröffentlichungen nicht angegeben. Der Rest-Carbonatgehalt kann von der chemischen Zusammensetzung der Aktivmasse abhängen, primär jedoch von der Art der Calcination.

In den meisten Veröffentlichungen wird statt des Anionengehalts der Begriff Glühverlust verwendet. Beide Größen bezeichnen die Restmenge an zersetzlichen Anionen im Produkt. Die Bestimmung des Glühverlusts erfolgt durch einfaches Tempern bei 900°C, wohingegen der Anionengehalt mittels chemischer Analyse bestimmt wird.

So beschreiben EP-A-0 034 388 und EP-A-0 152 809 Katalysatoren auf Basis von Kupfer zur Herstellung von Methanol und höheren Alkoholen. In EP-A-0 034 338 sind in Tabelle 1 typische Glühverluste für die Beispielkatalysatoren genannt. Sie liegen um 5 bis 8%, wie es nach den angegebenen Calcinationsbedingungen (3 h bei 400°C) auch zu erwarten ist. Die Tabelle zeigt auch, daß der Glühverlust primär von der Höhe und Dauer der Calcination und weniger von der chemischen Zusammensetzung der Katalysatoren abhängt.

EP-A-0 152 809 beschreibt ähnliche Katalysatorsysteme, ebenfalls zur Herstellung von Methanol und höheren Homologen geeignet. Hier liegt der Glühverlust der in Tabelle 1 angegebenen Katalysatoren zwischen 10 und 15 Gew.-%. Diese relativ hohen Werte kommen dadurch zustande, daß die Katalysatoren nur bei Temperaturen um 280°C calciniert wurden.

Erfindungsgemäß wurde nun ein Bezug zwischen Volumenschwund und Ausbauhärte des Katalysators mit dem Rest-Anionengehalt, insbesondere Rest-Carbonatgehalt aufgefunden, der die gezielte Optimierung dieser Parameter und damit der Katalysatoren erlaubt.

Im erfindungsgemäßen Verfahren kann zusätzlich in Stufe (3) der calcinierte Katalysatorvorläufer aus Stufe (2) zunächst reduziert, sodann passiviert und anschließend der Formgebung unterworfen werden. Es ist auch möglich, den calcinierten Katalysatorvorläufer aus Stufe (2) zunächst der Formgebung zu unterwerfen und anschließend zu reduzieren, wobei der erhaltene Katalysator oftmals nicht mehr pyrophor ist und daher auf eine Passivierung verzichtet werden kann.

Bei den erfindungsgemäß hergestellten Methanolreformierungskatalysatoren handelt es sich um Kupfer (in der Regel passiviert) und Zinkoxid oder Magnesiumoxid enthaltende Katalysatoren. Der Katalysator enthält neben Kupfer und Zinkoxid zusätzlich Aluminiumoxid und wird in Stufe (1) durch Fällung von Lösungen von Zink-, Aluminium-und Kupfersalzen hergestellt.

Geeignete Katalysatoren enthalten neben Kupfer und Zinkoxid Aluminiumoxid, das zumindest teilweise durch entsprechende Oxide von Zirkonium, Chrom, Mangan, Lanthan oder Yttrium ersetzt sein kann.

Die Herstellung des Katalysatorvorläufers erfolgt in Stufe (1) durch
(a) Fällen einer Lösung von Zink- und Aluminumsalzen, wobei das Atomverhältnis Zn : A1 3 : 1 - 1 : 3 beträgt, mit einer Alkalicarbonatlösung bei einem pH-Wert im Bereich von 5 bis 12 und einer Temperatur im Bereich von 20 bis 100°C,
(b) Abtrennen und Waschen des Niederschlags zur Entfernung von Alkaliionen,
(c) Trocknen des Niederschlags,
(d) Calcinieren des Niederschlags bei einer Temperatur im Bereich von 250 bis 800°C zu einem Mischoxid,
(e) Dispergieren des Mischoxids in einer sauren Lösung von Kupfer- und Zinksalzen,
   wobei in der Lösung das Atomverhältnis Cu : Zn 1 : 5 bis 20 : 1 beträgt,
(f) Fällen der Dispersion mit einer Alkalicarbonatlösung bei einem pH-Wert im Bereich von 6 bis 9 und einer Temperatur im Bereich von 20 bis 100°C,
(g) Durchführen der Schritte (b) bis (d),
wobei die Lösungen in Schritten (a) und/oder (e) zusätzlich Salze oder Oxide von einem oder mehreren Elementen der Platinmetalle der Gruppen 4, 5, 11 und der Lanthaniden des Periodensystems der Elemente enthalten können oder die Salze oder Oxide auf die Mischoxide aufgebracht sein können.

Die chemische Zusammensetzung der so hergestellten Katalysatoren kann in weiten Grenzen variieren. Vorzugsweise beträgt das Atomverhältnis Cu : Zn 1 : 5 bis 5 : 1, besonders bevorzugt 1 : 1 bis 4 : 1, insbesondere 2 : 1 bis 3 : 1. Das Atomverhältnis (Cu + Zn) : Al beträgt vorzugsweise 99 : 1 bis 70 : 30, besonders bevorzugt 95 : 5 bis 80 : 20. Speziell bevorzugt ist ein Verhältnis Cu : Zn : A1 von etwa 65 : 25 : 10.

Die Herstellung derartiger Katalysatoren ist in allgemeiner Form in DE-A-197 39 773 beschrieben. Für die einzelnen Herstellungsschritte kann auf diese Schrift verwiesen werden.

Zusätzlich zu den drei Elementen Cu, Zn und Al können noch weitere Elemente in den Katalysator eingebracht werden, wie Platinmetalle, Elemente der Gruppen 4, 5, 11 und der Lanthaniden des Periodensystems der Elemente. Bevorzugte Beispiele sind Pd, Pt, Rh, Ru, Os, Au, Zr, Ti, V, Nb, Ta sowie die Lanthaniden. Sie können beispielsweise in Form von Salzen oder Oxiden den Lösungen in den vorstehenden Schritten (a) und/oder (e) beigefügt werden oder als Salze oder Oxide auf die Mischoxide aufgebracht werden.

Die nach dem erfindungsgemäßen Verfahren hergestellten Katalysatoren können zur Dampfreformierung von Methanol oder höheren Alkoholen wie C₂₋₁₂-Alkoholen, zur partiellen Oxidation von Kohlenwasserstoffen, zur Wasserstoffgewinnung oder als CO-Shiftkatalysator eingesetzt werden.

Die Erfindung soll anhand zweier Beispiele näher erläutert werden, welche den positiven Effekt des geringen Rest-Carbonatgehalts auf den Volumenschwund und die Ausbauhärte von Cu-haltigen Katalysatoren wiedergeben. Dabei werden unterschiedlich hergestellte Cu-Katalysatoren gewählt, um die Allgemeingültigkeit des Effekts zu zeigen. Zusätzlich sollen entsprechende Vergleichsbeispiele zeigen, daß bei entsprechend höheren Carbonatgehalten auch der Volumenschwund des Katalysators deutlich erhöht ist. Parallel hierzu verringert sich die Härte des Katalysators im ausgebauten Zustand.

### Beispiel 1:

Ein Cu-Katalysator wird analog EP-A-0 296 734 (Beispiel 1) hergestellt. Die Zusammensetzung in Atom-% beträgt: Cu = 65%, Zn = 25%, Al = 10%. Das Fällprodukt der zweiten Fällstufe wird Na-frei gewaschen und bei 120°C getrocknet. Anschließend wird ein Teil des getrockneten Produkts bei 300°C für 1h im Drehrohrofen calciniert und zu Splitt von 0,5 bis 0,7 mm zerkleinert. (Katalysator 1a)

Ein weiterer Teil des Fällprodukts wird bei 400°C für eine Stunde im Drehrohrofen calciniert und anschließend zu Splitt von 0,5 bis 0,7 mm zerkleinert. (Katalysator 1b)

Ein weiterer Teil des Fällprodukts wird bei 500°C für eine Stunde im Drehrohrofen calciniert und anschließend zu Splitt von 0,5 bis 0,7 mm zerkleinert. (Katalysator 1c)

Die calcinierten Produkte werden anschließend vorkompaktiert und auf einer Tablettiermaschine zu 1,5 x 1,5 mm Kleintabletten tablettiert. Die Tablettierung wird so durchgeführt, daß die Seitendruckfestigkeit der Tabletten bei 30 bis 40 N liegt.

Die BET-Oberflächen und die Carbonatgehalte (2 h bei 900°C) der fertigen Tabletten wurden bestimmt. Es ergeben sich BET-Oberfläche und Carbonatgehalt zu den folgenden Werten:

| **Bezeichnung** | **Calcination** | **BET-Oberfläche [m²/g]** | **Carbonatgehalt** |
|---|---|---|---|
| Katalysator 1a | 1 h 300°C | 59,7 | 10% |
| Katalysator 1b | 1 h 400°C | 93,0 | 3% |
| Katalysator 1c | 1 h 500°C | 66,2 | 0,3% |

### Beispiel 2:

Ein Cu-Katalysator wird analog DE-A-35 20 832 (Katalysator 1) hergestellt. Die Zusammensetzung in Gew.-% beträgt: CuO = 40%, ZnO = 40%, Al₂O₃ = 20%. Das Fällprodukt wird Na-frei gewaschen und bei 120°C getrocknet. Das gesamte Produkt wird anschließend bei 300°C für 1 h im Drehrohrofen calciniert und zu Splitt von 0,5 bis 0,7 mm zerkleinert. (Katalysator 2a)

Ein weiterer Teil des Fällprodukts wird bei 375°C für eine Stunde im Drehrohrofen calciniert und anschließend zu Splitt von 0,5 bis 0,7 mm zerkleinert. (Katalysator 2b)

Ein weiterer Teil des Fällprodukts wird bei 430°C für eine Stunde im Drehrohrofen calciniert und anschließend zu Splitt von 0,5 bis 0,7 mm zerkleinert. (Katalysator 2c)

Die calcinierten Produkte werden anschließend vorkompaktiert und auf einer Tablettiermaschine zu 1,5 x 1,5 mm Kleintabletten tablettiert. Die Tablettierung wird so durchgeführt, daß die Seitendruckfestigkeit der Tabletten zwischen 25 und 40 N/Tablette liegt.

Die BET-Oberflächen und die Carbonatgehalte (2 h bei 900°C) der fertigen Tabletten wurden bestimmt. Es ergeben sich BET-Oberfläche und Carbonatgehalt zu den folgenden Werten:

| **Bezeichnung** | **Calcination** | **BET-Oberfläche [m²/g]** | **Carbonatgehalt** |
|---|---|---|---|
| Katalysator 2a | 300°C | 103,1 | 10% |
| Katalysator 2b | 375°C | 96,3 | 3% |
| Katalysator 2c | 430°C | 83,4 | 0,3% |

### Katalysatortest für Katalysatoren aus Beispiel 1 und 2:

Die Katalysatoren werden in einem Rohrreaktor gefüllt (Durchmesser 10 mm; Füllmenge = 10 ml) und bei 280°C und 2 bar mit einer Mischung aus Methanol und Wasser M/M = 1,5 beaufschlagt. Vor der Reaktion werden die Katalysatoren mit 1% H₂ in N₂ bei 200°C für mehrere Stunden aktiviert; nach dem Versuch mit verdünnter Luft bei Raumtemperatur passiviert. Die Katalysatoren werden zwischen 20 und 40 Stunden unter Reaktionsbedingungen betrieben. Alle Katalysatoren zeigen einen vergleichbaren Methanolumsatz und somit auch eine vergleichbare Wasserstoffentwicklung. Die Ausbaukatalysatoren wurden bezüglich Volumenschwund und Seitendruckfestigkeit vermessen. Für die Bestimmung des Volumenschwunds wird eine bestimmte Anzahl der Tabletten mittels einer Schieblehre auf +/- 0,01 mm vermessen. Die Bestimmung der Seitendruckfestigkeit geschieht mittels eines kommerziellen Härteprüfgeräts. Die Ergebnisse sind in der nachfolgenden Tabelle zusammengefaßt:

**Tabelle: Seitendruckfestigkeit und Volumenschwund nach Katalysatortest:**

| **Katalysator** | **Volumenschwund nach Test [Vol.-%]** | **Seitendruckfestigkeit vor Einbau [N/Tabl. ]** | **Seitendruckfestigkeit nach Test [N/Tabl. ]** |
|---|---|---|---|
| Katalysator 1a | 16,0 | 45,3 | 6,7 |
| Katalysator 1b | 22,4 | 51,0 | 7,4 |
| Katalysator 1c | 3,7 | 37,0 | 14,9 |
| | | | |
| Katalysator 2a | 9,9 | 27,0 | 11,2 |
| Katalysator 2b | 8,0 | 43,8 | 32,3 |
| Katalysator 2c | 1,1 | 42,0 | 33,15 |
| Katalysatoren 1a, 1b, 2a, 2b = Vergleich | | | |

## Patentansprüche

1. Verfahren zur Herstellung von Katalysatoren, enthaltend passiviertes Kupfer und Zinkoxid und Aluminiumoxid, durch
(1)
(a) Fällen einer Lösung von Zink- und Aluminiumsalzen, wobei das Atomverhältnis Zn : A13 : 1 - 1 : 3 beträgt, mit einer Alkalicarbonatlösung bei einem pH-Wert im Bereich von 5 bis 12 und einer Temperatur im Bereich von 20 bis 100°C,
(b) Abtrennen und Waschen des Niederschlags zur Entfernung von Alkaliionen,
(c) Trocknen des Niederschlags,
(d) Calcinieren des Niederschlags bei einer Temperatur im Bereich von 250 bis 800°C zu einem Mischoxid,
(e) Dispergieren des Mischoxids in einer sauren Lösung von Kupfer- und Zinksalzen, wobei in der Lösung das Atomverhältnis Cu : Zn 1 : 5 - 20 : 1 beträgt,
(f) Fällen der Dispersion mit einer Alkalicarbonatlösung bei einem pH-Wert im Bereich von 6 bis 9 und einer Temperatur im Bereich von 20 bis 100°C,
(g) Durchführen der Schritte (b) bis (d),
wobei die Lösungen in Schritten (a) und/oder (e) zusätzlich Salze oder Oxide von einem oder mehreren Elementen der Platinmetalle, der Gruppen 4, 5, 11. und der Lanthaniden des Periodensystems der Elemente enthalten können oder die Salze oder Oxide auf die Mischoxide aufgebracht sein können,
(2) Calcinieren des in Stufe (1) erhaltenen festen Katalysatorvorläufers bis zum Erreichen eines Anionengehalts aus dem Fällungsmittel von 0,1 bis 2,5 Gew.-%,
(3) Formgebung, Reduzieren und Passivieren des calcinierten Katalysatorvorläufers aus Stufe (2) in beliebiger Reihenfolge zur Bildung des Katalysators.

2. Verfahren nach Anspruch 1, **dadurch gekennzeichnet, daß** in Stufe (3) der calcinierte Katalysatorvorläufer aus Stufe (2) zunächst reduziert, sodann passiviert wird und anschließend der Formgebung unterworfen wird.

3. Katalysator, erhältlich nach einem Verfahren gemäß Anspruch 1 oder 2.

4. Verwendung eines Katalysators gemäß Anspruch 3 zur Dampfreformierung von Methanol oder von höheren Alkoholen, zur partiellen Oxidation von Kohlenwasserstoffen, zur Wasserstoffgewinnung oder als CO-Sbiftkatalysator.

5. Verfahren zur Dampfreformierung von Methanol durch Umsetzung von Methanol und Wasser an einem Katalysator gemäß Ansprüch 3 bei einem Druck von 0,5 bis 10 bar und einer Temperatur von 150 bis 450°C.

6. Verfahren zur CO-Konvertierung mit Wasser zur Bildung von CO₂ und Wasserstoff, **dadurch gekennzeichnet, daß** die Umsetzung an einem Katalysator gemäß Anspruch 3 durchgeführt wird.

## Claims

1. A process for the preparation of a catalyst containing passivated copper and zinc oxide and alumina by
(1) (a) precipitating a solution of zinc and aluminum salts, the atomic Zn : Al ratio being 3 : 1 - 1 : 3, with an alkali metal carbonate solution at a pH of from 5 to 12 and at from 20 to 100°C,
(b) separating off and washing the precipitate to remove alkali metal ions,
(c) drying the precipitate,
(d) calcining the precipitate at from 250 to 800°C to give a mixed oxide,
(e) dispersing the mixed oxide in an acidic solution of copper and zinc salts, the atomic Cu : Zn ratio of the solution being from 1 : 5 to 20 : 1,
(f) precipitating the dispersion with an alkali metal carbonate solution at a pH of from 6 to 9 and at from 20 to 100°C,
(g) carrying out steps (b) to (d), it being possible for the solutions in steps (a) and/or (e) additionally to contain salts or oxides of one or more elements of the platinum metals of groups 4, 5 and 11 and of the lanthanides of the Periodic Table of the Elements or for the salts or oxides to be applied to the mixed oxides,
(2) calcining the solid catalyst precursor obtained in stage (1) to an anion content from the precipitating agent of from 0.1 to 2.5% by weight and
(3) shaping, reducing and passivating the calcined catalyst precursor from stage (2) in any desired order to form the catalyst.

2. The process according to claim 1, wherein, in stage (3), the calcined catalyst precursor from stage (2) is first reduced, then passivated and then subjected to the shaping process.

3. A catalyst obtainable by a process according to claim 1 or 2.

4. Use of a catalyst according to claim 3 for the steam reforming of methanol or of higher alcohols, for the partial oxidation of hydrocarbons, for the production of hydrogen or as a CO shift catalyst.

5. A process for the steam reforming of methanol by reacting methanol and water over a catalyst according to claim 3 at from 0.5 to 10 bar and at from 150 to 450°C.

6. A process for CO conversion with water to form CO₂ and hydrogen, wherein the reaction is carried out over a catalyst according to claim 3.

## Revendications

1. Procédé de préparation de catalyseurs contenant du cuivre passivé et de l'oxyde de zinc et de l'oxyde d'aluminium, par :
(1) (a) précipitation d'une solution de sels de zinc et d'aluminium, le rapport atomique Zn : Al étant de 3:1 à 1:3, avec une solution de carbonate de métal alcalin à un pH dans la plage de 5 à 12 et à une température dans la plage de 20 à 100 °C,
(b) séparation et lavage du précipité pour l'élimination des ions de métaux alcalins,
(c) séchage du précipité,
(d) calcination du précipité à une température dans la plage de 250 à 800 °C pour donner lieu à un oxyde mixte,
(e) dispersion de l'oxyde mixte dans une solution de sels de cuivre et de zinc, le rapport atomique Cu : Zn dans la solution étant de 1:5 à 20:1,
(f) précipitation de la dispersion avec une solution de carbonate de métal alcalin à un pH dans la plage de 6 à 9 et à une température dans la plage de 20 à 100 °C,
(g) réalisation des étapes (b) à (d),
les solutions dans les étapes (a) et/ou (e) pouvant, en outre, contenir des sels
ou des oxydes d'un ou de plusieurs éléments des métaux du type platine des groupes 4, 5, 11 et des lanthanides du système périodique des éléments, ou les sels ou oxydes pouvant être appliqués sur les oxydes mixtes,
(2) calcination du précurseur de catalyseur solide obtenu dans l'étape (1) jusqu'à l'obtention d'une teneur en anions à partir de l'agent de précipitation de 0,1 à 2,5 % en poids,
(3) façonnage, réduction et passivation du précurseur de catalyseur calciné de l'étape (2) dans un ordre quelconque pour former le catalyseur.

2. Procédé selon la revendication 1, **caractérisé en ce que**, dans l'étape (3), le précurseur de catalyseur calciné de l'étape (2) est d'abord réduit, puis passivé et ensuite soumis au façonnage.

3. Catalyseur pouvant être obtenu par un procédé selon la revendication 1 ou 2.

4. Utilisation d'un catalyseur selon la revendication 3 pour le reformage à la vapeur du méthanol ou d'alcools supérieurs, pour l'oxydation partielle d'hydrocarbures, pour la production d'hydrogène ou en tant que catalyseur de conversion du CO.

5. Procédé de reformage à la vapeur du méthanol par la réaction du méthanol et de l'eau sur un catalyseur selon la revendication 3 à une pression de 0,5 à 10 bars et à une température de 150 à 450 °C.

6. Procédé de conversion du CO avec de l'eau pour la formation de CO₂ et d'hydrogène, **caractérisé en ce que** la réaction est effectuée sur un catalyseur selon la revendication 3.
